# EUROPEAN PATENT SPECIFICATION

(11) **EP 3 315 475 B1**
(45) Date of publication and mention of the grant of the patent: **08.04.2020**
(21) Application number: 16814435.0
(22) Date of filing: 23.06.2016
(51) Int. Cl.: C04B 35/101, C21B 7/06, F27D 1/00, C04B 35/10, F27D 1/16, C04B 35/63

(54) **BRICK FOR HEARTH SECTION OF MOLTEN PIG IRON PRODUCTION FURNACE**
ZIEGEL FÜR HERDABSCHNITT EINES OFENS ZUR HERSTELLUNG VON GESCHMOLZENEM ROHEISEN
BRIQUES DE LIT DE FOUR POUR FOUR DE PRODUCTION DE FER FONDU

(30) Priority: 25.06.2015 JP 2015127937
(43) Date of publication of application: 02.05.2018
(73) Proprietor: Krosakiharima Corporation, Kitakyushu-shi Fukuoka 806-8586 (JP)
(72) Inventor: MISHIMA, Masaaki, Kitakyushu-shi Fukuoka 806-8586 (JP); NAKAGOME, Michiru, Kitakyushu-shi Fukuoka 806-8586 (JP)
(74) Representative: Vossius & Partner Patentanwälte Rechtsanwälte mbB
(86) International application number: PCT/JP2016/068641
(87) International publication number: WO 2016/208666

(56) References cited:
- EP-A1- 0 482 984
- EP-A1- 3 081 548
- WO-A1-2009/072652
- WO-A1-2015/087672
- WO-A1-2018/123726
- JP-A- S6 110 053
- JP-A- H06 502 140
- US-A- 4 670 407
- US-A- 5 215 947
- GUO YU XIANG ET AL: "Influence of Z value and sintering temperature on properties of [beta]?-Sialon bonded corundum composite", ADVANCED MATERIALS RESEARCH , vol. 287-290 pages 183-187, XP009509469, ISSN: 1662-8985, DOI: 10.4028/WWW.SCIENTIFIC.NET/AMR.287-290.183 Retrieved from the Internet: URL:https://www.scientific.net/AMR.287-290 .183 [retrieved on 2011-07-01]
- JUNDINGA ET AL: "Effects of silicon powder content on the properties and interface bonding of nitrided Al2O3-C refractories", MATERIALS CHEMISTRY AND PHYSICS, ELSEVIER SA, SWITZERLAND, TAIWAN, REPUBLIC OF CHINA, vol. 206, 15 February 2018 (2018-02-15), pages 193-203, XP009509467, ISSN: 0254-0584
- GONG GAN-LEI ET AL: "Effect of Z value in sialon phase on microstructure and properties of synthesized sialon-corundum refractory materials", DONGBEI DAXUE XUEBAO (ZIRAN KEXUE BAN) - NORTHEASTERN UNIVERSITY.JOURNAL (NATURAL SCIENCES), DONGBEI DAXUE, XUEBAO BIANJIBU, SHENYANG, CN, vol. 25, no. 12, 30 November 2004 (2004-11-30), pages 1161-1164, XP009509470, ISSN: 1005-3026
- LIU XIN-HONG ET AL: "Preparation and Properties of Al2O3-SiC-SiAlON Composites", JOURNAL OF ZHENGZHOU UNIVERSITY ENGINEERING SCIENCE,, vol. 33, no. 1, 1 January 2012 (2012-01-01), pages 46-50, XP009509468, ISSN: 1671-6833

## Description

### TECHNICAL FIELD

The present invention relates to a brick for a hearth section of a molten pig iron production furnace capable of producing molten pig iron, such as a blast furnace or a smelting reduction furnace.

### BACKGROUND ART

In a molten pig iron production furnace capable of producing molten pig iron, such as a blast furnace or a smelting reduction furnace, a hearth section of the furnace is formed primarily using a carbonaceous brick comprising graphite as an aggregate, or an aluminaceous brick comprising alumina as an aggregate. In this situation, one factor dominating furnace lifetime is wear damage or loss of such a brick.

For example, while a mainstream lining material for a sidewall of a hearth section of a blast furnace is a carbonaceous brick (block), such a brick containing a carbon component in a relatively large amount is poor in terms of molten pig iron resistance, because carbon contained in the brick is liable to dissolve into molten pig iron during use in the hearth section of the blast furnace. For this reason, the molten pig iron resistance is ensured by enhancing cooling of the lining material from outside the furnace to form a viscous molten pig iron layer on a working surface of the brick to thereby prevent dissolution of carbon from the carbonaceous brick into molten pig iron. However, such cooling from outside the furnace will cause large energy loss.

Therefore, in recent years, an aluminaceous brick prepared by primarily using alumina which is less likely to dissolve into molten pig iron, while reducing the carbon content, has also been increasingly used. In particular, a sialon-bonded alumina brick containing β'-sialon represented by the following chemical formula: Si_{6-Z}Al_{Z}O_{Z}N_{8-Z}, in a matrix portion thereof, contains almost no carbon, so that it is excellent in the molten pig iron resistance, and excellent in corrosion resistance against slag produced in a blast furnace (slag resistance). In addition, the sialon-bonded alumina brick is suitable as a lining brick for a hearth section of a blast furnace, from a viewpoint of being capable of exhibiting: higher high-temperature strength and higher resistance to alkali corrosion as compared to conventional oxide-based refractory bricks; lower thermal conductivity as compared to a silicon carbide-bound brick and a silicon nitride-bound brick as a representative example of a brick having a non-oxide-bound microstructure; and high structural spalling resistance.

For example, in the following Patent Document 1, there is disclosed a sialon-bonded alumina brick containing, in a matrix portion (binding matrix) thereof, β'-sialon in an amount of 12 to 45 mass%, wherein the β'-sialon has a Z value (as used in this specification, the term "Z value" means a value of Z in the chemical formula of β'-sialon: Si_{6-Z}Al_{Z}O_{Z}N_{8-Z}) of 0.5 to 4. However, the sialon-bonded alumina brick disclosed in the Patent Document 1 is unsatisfactory in terms of the molten pig iron resistance, because Si in β'-sialon contained in the matrix portion of the brick will dissolve into molten pig iron little by little, thereby leading to an increase in loss of the brick.

The following Patent Document 2 discloses, in the column H of Table 3, a sialon-bond alumina brick containing 20 mass% of 15R-type as AlN polytype sialon and further containing 8 mass% of TiN, and describes that it is possible to improve not only resistance against corrosion due to molten steel but also bending strength of a material, as compared to sialon. In this regard, the present inventors checked the molten pig iron resistance of a sialon-bond alumina brick produced in accordance with the column H of Table 3 in the Patent Document 2. As a result, the inventors found that the brick is at approximately the same level as conventional sialon-bond alumina bricks, and thus further improvement in the molten pig iron resistance is required for application to a brick for a hearth section of a molten pig iron production furnace.

Further, in the following Patent Document 3, there is disclosed a brick for a blast furnace hearth, in which a microstructure of the brick consists of a crystalline phase and an amorphous phase, wherein the crystalline phase comprises corundum contained in an amount of 80 to 98 mass%, and an aluminum nitride crystal and/or an aluminum carbonate crystal contained in an amount of 1 to 18 mass%, and the amorphous phase is contained in an amount of 0.5 to 10 mass%, and wherein an Si content is 3 mass% or less. The brick disclosed in the Patent Document 3 is excellent in the molten pig iron resistance, because the Si content is relatively small. On the other hand, because aluminum nitride is more likely to be hydrated and is thereby poor in terms of hydration resistance, generation of harmful gas and/or microstructural degradation of the brick occur due to hydration, during storage of the brick or during or after construction of a lining

### CITATION LIST

### [Parent Document]

Patent Document 1: JP H06-502140 A (JP 3212600 B)
Patent Document 2: JP H10-509686 A
Patent Document 3: WO 2009/072652 A

### SUMMARY OF INVENTION

### [Technical Problem]

A technical problem to be addressed by the present invention is to provide a brick for a hearth section of a molten pig iron production furnace, which is improved in molten pig iron resistance without causing deterioration in slag resistance and hydration resistance.

### [Solution to Technical Problem]

Among four components (i.e., Si, Al, O and N) composing sialon, Si has a property that it easily dissolves in molten pig iron. Therefore, as a means to enhance the molten pig iron resistance of the brick, the present inventors focused on an aluminaceous brick containing β'-sialon having a relatively small Si content rate, i.e., a relatively large Z value among β'-sialons, or AlN polytype sialon. Then, the present inventors checked up the molten pig iron resistance, the slag resistance and the hydration resistance of a sialon phase composed of four components consisting of Si, Al, O and N. As a result, it has been found that, among various types of AlN polytype sialons, three types of AlN polytype sialons consisting of 2H δ-type, 27R-type and 21R-type AlN polytype sialons are markedly excellent in the molten pig iron resistance, and is free from deterioration in the slag resistance and the hydration resistance.

That is, the present invention proposes a brick for a hearth section of a molten pig iron production furnace, having the following features as described in Sections (1) to (5).
(1) A brick for a hearth section of a molten pig iron production furnace, comprising a mineral composition which has: 40 to 95 mass% of corundum; 5 to 60 mass% of one or more selected from the group consisting of 2H δ-type, 27R-type and 21R-type AlN polytype sialons; 5 mass% or less (including 0 mass%) of AlN; and 3 mass% or less (including 0 mass%) of Si₃N₄, wherein a matrix portion of the brick contains the one or more AlN polytype sialons in an amount of 5 mass% or more.
(2) A brick for a hearth section of a molten pig iron production furnace, comprising a mineral composition which has: 40 to 94 mass% of corundum; 10 mass% or less of graphite and/or coke; 5 to 59 mass% of one or more selected from the group consisting of 2H δ-type, 27R-type and 21R-type AlN polytype sialons; 5 mass% or less (including 0 mass%) of AlN; and 3 mass% or less (including 0 mass%) of Si₃N₄, wherein a matrix portion of the brick contains the one or more AlN polytype sialons in an amount of 5 mass% or more.
(3) The brick described in Section (1) or (2), wherein the matrix portion contains the one or more AlN polytype sialons in an amount of 10 to 25 mass%, and corundum in an amount of 5 to 30 mass%/
(4) The brick described in any one of Sections (1) to (3), wherein an aggregate portion of the brick is free of the one or more AlN polytype sialons.
(5) The brick described in any one of Sections (1) to (4), wherein the one or more AlN polytype sialons have a crystal size of 0.5 mm or less.

As used herein, the term "AlN polytype sialon" means Si-Al-O-N solid solution, and, according to the Ramsdell notation, there are six types of AlN polytype sialons consisting of 2H δ-type, 27R-type, 21R-type, 12H-type, 15R-type and 8H-type AlN polytype sialons, as enumerated in ascending order of Si content rate. In the present invention, among them, three types of AlN polytype sialons consisting of 2H δ-type, 27R-type and 21R-type AlN polytype sialons each having a relatively small Si content rate are used.

The microstructure of the brick of the present invention consists of an aggregate portion composed of aggregates, and a matrix section which is a binding microstructure for binding the aggregates together.

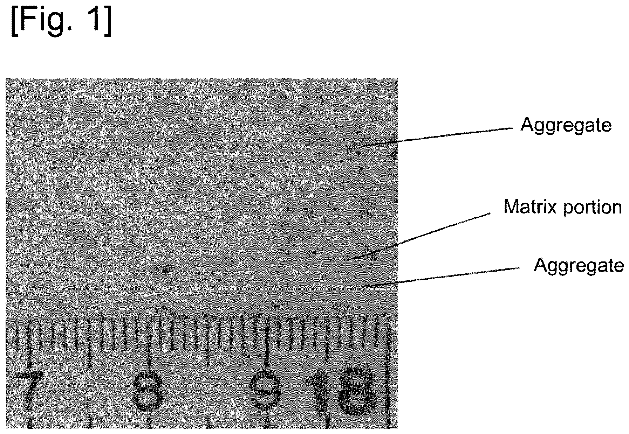

The term "aggregate" means a grain which holds an original shape of a refractory particle used as a raw material, and the term "matrix portion" means a portion of the microstructure formed as a result of sintering of fine particles of raw materials used, wherein the portion continuously exists among the aggregates, as depicted in FIG. 1.

With a view to utilizing excellent molten pig iron resistance of corundum, the brick of the present invention contains corundum in an amount of 40 to 95 mass% (when the brick contains graphite and/or coke, in an amount of 40 to 94 mass%), preferably in an amount of 55 to 80 mass%. If the content is 40 mass% or less, the molten pig iron resistance becomes insufficient. On the other hand, if the content is greater than 95 mass%, the content of the three types of AlN polytype sialons is reduced, so that it becomes impossible to obtain a slag resistance-enhancing effect by the AlN polytype sialons, leading to deterioration in the slag resistance.

In the brick of the present invention, one or more of the three types of AlN polytype sialons are contained in the matrix portion in a total amount of 5 mass% or more. The three types of AlN polytype sialons are excellent in the molten pig iron resistance, as compared to other sialons such as β'-sialon, as mentioned above. Thus, by enabling one or more of the three types of AlN polytype sialons to be contained in the matrix portion in an amount of 5 mass% or more, it becomes possible to enhance the molten pig iron resistance, particularly, in the matrix portion including a sialon bond, and simultaneously enhance a molten pig iron penetration-suppressing effect, as compared to the conventional sialon-bond alumina brick.

The three types of AlN polytype sialons may also be contained in the aggregate portion. In this case, it is contained in the matrix portion and the aggregate portion in a total amount of 5 to 60 mass% (when the brick contains graphite and/or coke, in an amount of 5 to 59 mass%), preferably in an amount of 15 to 40 mass%. If the content is less than 5 mass%, the slag resistance-enhancing effect originally brought out by sialon becomes insufficient. On the other hand, if the content is greater than 60 mass%, the content is relatively reduced, so that the molten pig iron resistance becomes insufficient.

With a view to further enhancing the slag resistance, the brick of the present invention may contain graphite and/or coke in an amount of 10 mass% or less. If the content is greater than 10 mass%, this gives rise to the aforementioned problem with a brick containing a carbon component in a relatively large amount, i.e., the problem that carbon dissolves into molten pig iron during use in the hearth section, leading to deterioration in the molten pig iron resistance.

Further, in the brick of the present invention, the matrix portion may contain corundum in an amount of 5 to 30 mass% to thereby enhance the molten pig iron resistance, and the one or more of the three types of AlN polytype sialons in a total amount of 10 to 25 mass%, to thereby simultaneously enhance the molten pig iron resistance and the slag resistance.

Further, in the brick of the present invention, the aggregate portion may consist only of corundum which is less likely to dissolve in molten pig iron, without containing any of the three types of AlN polytype sialons, to thereby further enhance the molten pig iron resistance.

The brick of the present invention may contain AlN as long as the content thereof is 5 mass% or less, without occurring any problem associated with deterioration in the hydration resistance. Rather, it is possible to enhance the molten pig iron resistance.

In the brick of the present invention, a crystal size of the three types of AlN polytype sialons is practically preferably set to a smaller value, because such a crystal size makes it easier to form the brick to have a dense microstructure and exhibit high strength. Specifically, the crystal size of the one or more AlN polytype sialons, at least in the matrix portion, is preferably 0.5 mm or less, more preferably 0.05 mm or less.

### [Effect of Invention]

The brick of the present invention is excellent in the molten pig iron resistance and the hydration resistance, and thereby makes it possible to improve a usable life of a hearth section of a molten pig iron production furnace

### BRIEF DESCRIPTION OF DRAWINGS

FIG. 1 is a photograph depicting one example of a microstructure of a brick according to the present invention.

### DESCRIPTION OF EMBODIMENTS

Based on a conventional sialon-bonded alumina brick production process, a brick according to the present invention can be obtained by: preparing a refractory raw material mixture comprising an alumina ultrafine powder, an Al powder and an Si powder, which are mixed at a ratio set so as to provide a composition of an intended AlN polytype sialon (a composition of one of the aforementioned three types of AlN polytype sialons) and a content thereof, after nitrating and burning; adding a binder to the refractory raw material mixture; subjecting the resulting mixture to kneading and shaping to form a shaped body; and subjecting the shaped body to burning in a nitrogen atmosphere at 1000 to 1450°C. That is, through this production process, it is possible to obtain an intended brick according to the present invention, in which one of the three types of AlN polytype sialons is contained in a matrix portion thereof. For example, for enabling 27R-type AlN polytype sialon to be formed and contained in the matrix portion, the mixing ratio of the raw materials in the refractory raw material mixture may be set to Al : Si : Al₂O₃ = 65 to 66 : 2 to 10 : 24 to 33.

On the other hand, in the case where one of the three types of AlN polytype sialons is contained in an aggregate portion, an aggregate powder containing the AlN polytype sialon (AlN polytype sialon-based aggregate powder) can be obtained by: preparing a mixture of an alumina ultrafine powder, an Al fine powder and an Si fine powder, respective amounts of which are adjusted so as to enable a composition of an intended AlN polytype sialon (a composition of one of the three types of AlN polytype sialons) to be provided; subjecting the mixture to burning in a nitrogen atmosphere at 800 to 1450°C; and subjecting resulting sintered aggregate particles to particle size control. The obtained aggregate powder can be added to the aforementioned refractory raw material mixture so as to obtain a brick according to the present invention, in which one of the three types of AlN polytype sialons is contained in an aggregate portion, as well as in a matrix portion thereof. Further, by using a mixture prepared by adding, to the refractory raw material mixture, two or three types of aggregate powders each containing a respective one of different two or more of the three types of AlN polytype sialons, it is possible to obtain a brick according to the present invention, which contains two or all of the three types of AlN polytype sialons.

In the above production process, as the alumina ultrafine powder, it is preferable to use alumina particles having an average particle size of 50 µm or less, specifically activated alumina particles (calcined alumina particles). The use of fused alumina particles or sintered alumina particles causes difficulty in forming the three types of AlN polytype sialons. A crystal size of AlN polytype sialon can be controlled, depending on a size of a fine powder to be used as a raw material, and a maximum temperature and a holding time in conditions for the nitriding and burning. As one example, for forming AlN polytype sialon having a crystal size of 0.5 mm or less by using, as raw materials, an alumina ultrafine powder, an Al powder and an Si powder, a particle size of the alumina ultrafine powder and a particle size of each of the Al powder and the Si powder may be set, respectively, to 50 µm or less and 0.1 mm or less, and the maximum temperature and the holding time in the conditions for the nitriding and burning may be set, respectively, to 1400°C and about 10 hours.

As above, the brick according to the present invention, in which one of the three types of AlN polytype sialons is contained in the matrix portion can be obtained by using, as raw materials, a refractory raw material mixture prepared by mixing an alumina ultrafine powder, an Al powder and an Si powder, which are mixed at a given ratio. However, due to slight excess or deficiency of the raw materials used, AlN and Si₃N₄ can be formed in a small amount. However, as long as the content of AlN is 5 mass% or less, more preferably 1 mass% or less, and the content of Si₃N₄ is 3 mass% or less, more preferably 1 mass% or less, they may be contained without any adverse effect. In the above case, only one of the three types of AlN polytype sialons is formed in the matrix portion. Thus, when it is necessary to enable two or more of the three types of AlN polytype sialons to be contained in the matrix portion, a mixed fine powder formed by pulverizing the aforementioned two or three types of AlN polytype sialon-based aggregate powders may be added to the the refractory raw material mixture.

As a raw material for corundum to be contained in a brick according to the present invention, it is possible to use fused alumina, sintered alumina, and the like. Further, as a raw material for graphite to be contained in a brick according to the present invention, it is possible to use flake graphite, soil graphite, electrode scrap, and the like. In order to enable each of the components to be contained in an aggregate, it may be formed using a raw material having a particle size of 0.1 mm or more.

As mentioned above, the Patent Document 2 describes that the molten steel corrosion resistance of a sialon-bonded brick is improved by adding TiN to the brick. However, TiN has a property that it dissolves into molten pig iron, so that molten pig iron penetrates into a void arising from the dissolution to thereby accelerate loss of the brick. Thus, in a brick according to the present invention, TiN is not contained.

### EXAMPLES

Table 1 presents Inventive Examples of a brick according to the present invention, together with Comparative Examples.

### TABLE 1

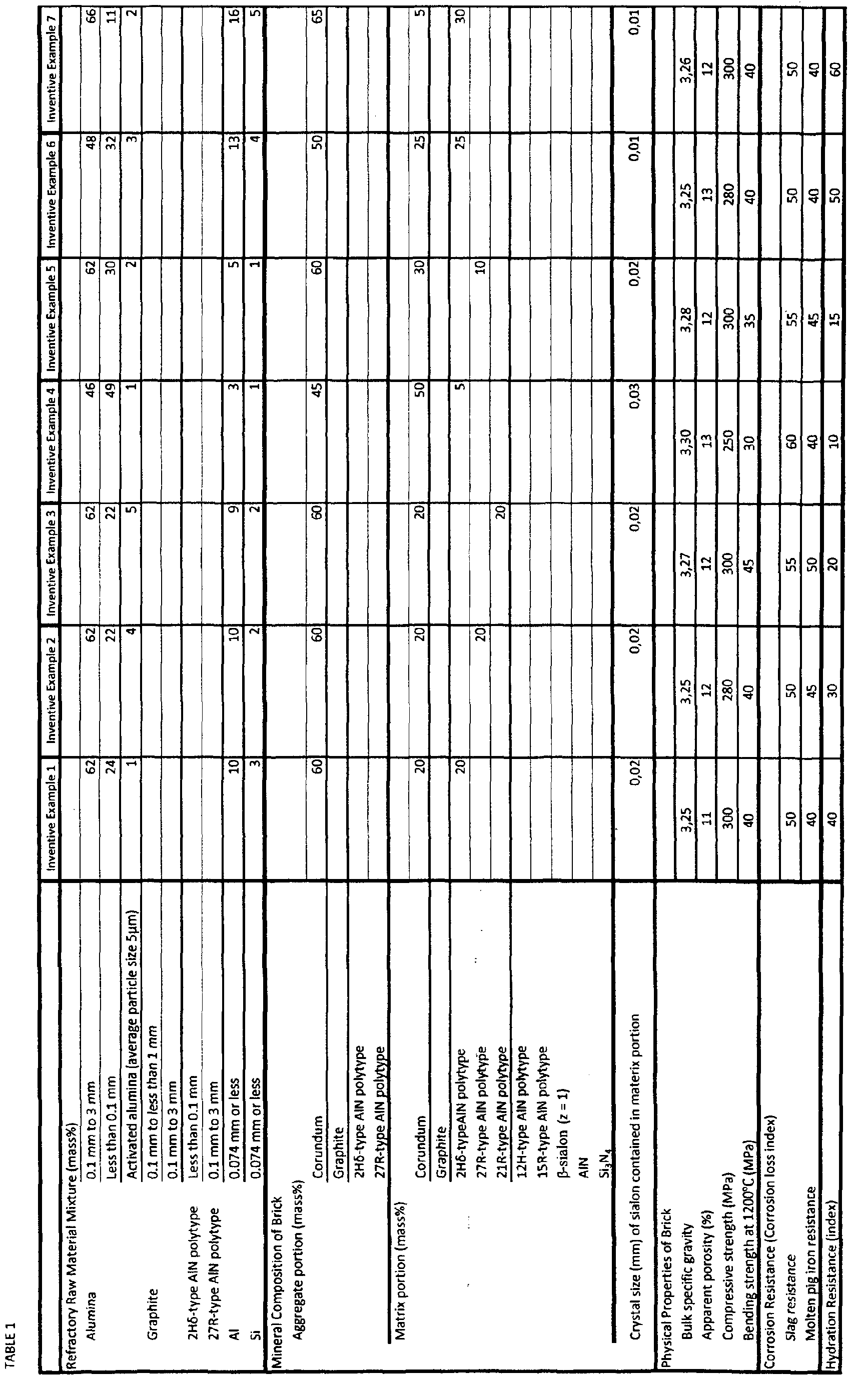

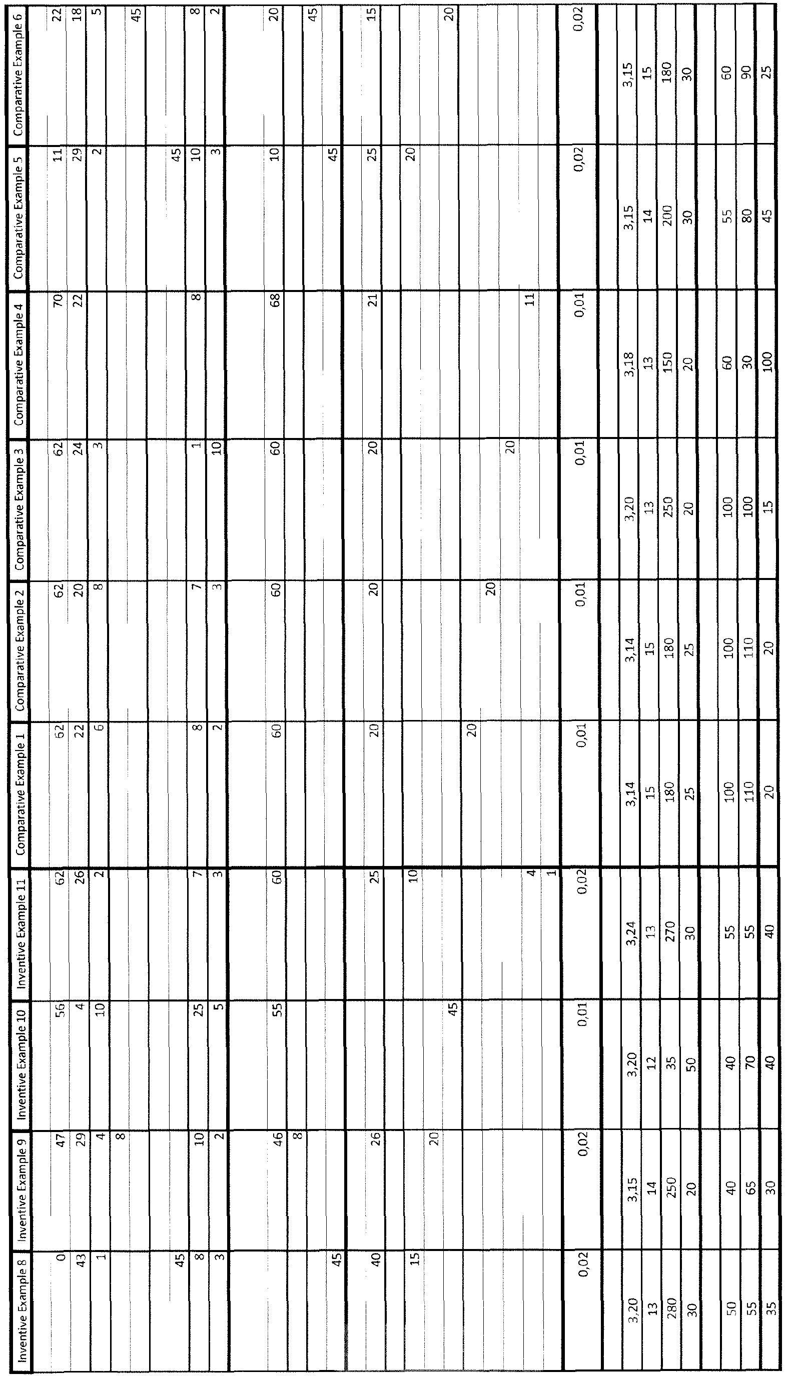

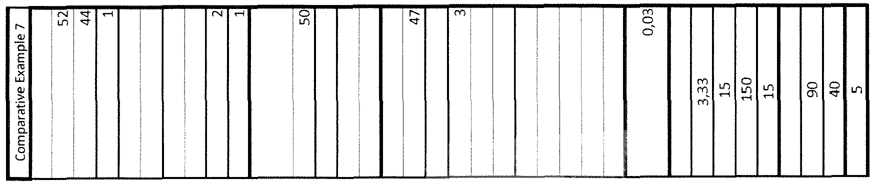

Each brick in Inventive and Comparative Examples was obtained by: adding an appropriate amount of resol-type phenolic resin to a corresponding one of refractory raw material mixtures presented in Table 1; and kneading the resulting mixture; forming the kneaded mixture into a shaped body having a shape of a JIS standard-shaped brick, by an oil press; and subjecting the shaped body to heating at 250°C and then burning in a nitrogen atmosphere at 1400°C.

As to each of the obtained bricks, a mineral composition was analyzed, and bulk specific gravity, apparent porosity, compressive strength, and bending strength at 1200°C were measured to evaluate physical properties. Further, corrosion resistance (stag resistance and molten pig iron resistance) and hydration resistance were evaluated.

In the mineral composition analysis, an amount of aggregates in a brick microstructure was evaluated from an image of a cut surface of the brick, using commercially-available image analyzing software. An amount of sialon contained in a matrix portion was determined by a content rate of nitrogen in the brick, and identification of a sialon phase by an X-ray diffraction method. A crystal size of sialon contained in the matrix portion was measured from a microscopic image obtained by an electronic microscope. An amount of a mineral component other than sialon, contained in the matrix portion, was measured by means of an X-ray diffraction method, a chemical analysis method, and a wavelength-dispersive X-ray spectroscope.

The bulk specific gravity and the apparent porosity were measured according to JIS-R2205, and the compressive strength and the bending strength at 1200°C were measured according to JIS-R2206 and JIS-R2213, respectively.

The corrosion resistance was evaluated by: immersing a square bar-shaped test brick having a size of 20 × 20 × 180 mm, in a bath prepared by melting blast-furnace slag and pig iron and adjusting the resulting melt at 1600°C, to corrode the test brick for 5 hours; measuring a corroded thickness; and expressing the measured corroded thickness by a corrosion loss index calculated on an assumption that the corroded thickness in Comparative Example 3 is 100. The molten pig iron resistance was evaluated by a corroded thickness in a portion of the brick immersed in molten pig iron (molten pig iron-immersed portion), and the slag resistance was evaluated by a corroded thickness in a maximally lost region of a portion of the brick located at a slag-molten pig iron boundary (slag-molten pig iron boundary portion).

The hydration resistance was evaluated by measuring, using an ammonia concentration meter, an amount of ammonia gas generated in a state in which the JIS standard-shaped test brick was immersed in water at normal temperature for 24 hours, and expressing the measured amount as an index calculated on an assumption that the amount of ammonia gas in Comparative Example 4 is 100. A smaller value of this index means better hydration resistance.

Inventive Example 1, Inventive Example 2 and Inventive Example 3 are, respectively, a brick according to the present invention, in which 2H δ-type AlN polytype sialon is contained in a matrix portion thereof in an amount of 20 mass%, a brick according to the present invention, in which 27R-type AlN polytype sialon is contained in a matrix portion thereof in an amount of 20 mass%, and a brick according to the present invention, in which 21R-type AlN polytype sialon is contained in a matrix portion thereof in an amount of 20 mass%. Table 1 shows that the bricks of Inventive Examples 1 to 3 are markedly excellent in molten pig iron resistance, as compared to Comparative Example 1, Comparative Example 2 and Comparative Example 3 which are, respectively, a brick in which 12H-type AlN polytype sialon is contained in a matrix portion thereof in an amount of 20 mass%, a brick in which 15R-type AlN polytype sialon is contained in a matrix portion thereof in an amount of 20 mass%, and a brick in which β-sialon is contained in a matrix portion thereof in an amount of 20 mass%. Table 1 also shows that a brick of Comparative Example 4, wherein AlN is contained in a matrix portion thereof in an amount of 11 mass%, the hydration resistance is deteriorated, although it is excellent in the molten pig iron resistance.

All bricks of Inventive Examples 4 to 7, which contain one or more of the 2H δ-type, 27R-type and 21R-type AlN polytype sialons, in respective matrix portions thereof in different amounts, and corundum in different amounts, within the ranges set forth in the appended claims, are excellent in the molten pig iron resistance, the slag resistance and the hydration resistance.

A brick of Inventive Example 8, which contains the 27R-type and 2H δ-type AlN polytype sialons, respectively, in aggregate and matrix portions thereof, is excellent in all of the molten pig iron resistance, the slag resistance and the hydration resistance.

A brick of Inventive Example 9, which contains flake graphite in an aggregate portion thereof to serve as the graphite, is excellent particularly in the slag resistance.

A brick of Inventive Example 10, which has a matrix portion consists only of the 21R-type AlN polytype sialon, is excellent in all of the molten pig iron resistance, the slag resistance and the hydration resistance.

In a brick of Inventive Example 11, which contains AlN and Si₃N₄ in a total amount of 5 mass%, there is not a major negative influence of the AlN and Si₃N₄ on the molten pig iron resistance, the slag resistance and the hydration resistance.

On the other hand, in bricks of Comparative Examples 5 and 6, each of which contains one or more of the 2H δ-type, 27R-type and 21R-type AlN polytype sialons in an amount greater than the upper limit set forth in the appended claims. As a result, corundum is relatively reduced, and therefore a molten pig iron resistance-enhancing effect by corundum declines.

On the other hand, in a brick of Comparative Example 7, which contains one or more of the 2H δ-type, 27R-type and 21R-type AlN polytype sialons in an amount less than the lower limit set forth in the appended claims. As a result, the slag resistance-enhancing effect by sialon declines, although the molten pig iron resistance by corundum is excellently maintained.

## Claims

1. A brick for a hearth section of a molten pig iron production furnace, comprising a mineral composition which has: 40 to 95 mass% of corundum; 5 to 60 mass% of one or more selected from the group consisting of 2H δ-type, 27R-type and 21R-type AlN polytype sialons; 5 mass% or less (including 0 mass%) of AlN; and 3 mass% or less (including 0 mass%) of Si₃N₄, wherein a matrix portion of the brick contains the one or more AlN polytype sialons in an amount of 5 mass% or more.

2. The brick as recited in claim 1, wherein the mineral composition has: 40 to 94 mass% of corundum; 10 mass% or less of graphite and/or coke; 5 to 59 mass% of one or more selected from the group consisting of 2H δ-type, 27R-type and 21R-type AlN polytype sialons; 5 mass% or less (including 0 mass%) of AlN; and 3 mass% or less (including 0 mass%) of Si₃N₄, wherein a matrix portion of the brick contains the one or more AlN polytype sialons in an amount of 5 mass% or more.

3. The brick as recited in claim 1 or 2, wherein the matrix portion contains the one or more AlN polytype sialons in an amount of 10 to 25 mass%, and corundum in an amount of 5 to 30 mass%.

4. The brick as recited in any one of claims 1 to 3, wherein an aggregate portion of the brick is free of the one or more AlN polytype sialons.

5. The brick as recited in any one of claims 1 to 4, wherein the one or more AlN polytype sialons have a crystal size of 0.5 mm or less.

## Patentansprüche

1. Ein Ziegel für einen Herdabschnitt eines Ofens zur Herstellung von geschmolzenem Roheisen, umfassend eine Mineralzusammensetzung, welche enthält: 40 bis 95 Massen-% Korund; 5 bis 60 Massen-% eines oder mehrerer, ausgewählt aus der Gruppe bestehend aus AlN-Polytyp-Sialonen vom 2H δ-Typ, 27R-Typ und 21R-Typ; 5 Massen-% oder weniger (einschließlich 0 Massen-%) AlN; und 3 Massen-% oder weniger (einschließlich 0 Massen-%) Si₃N₄, wobei ein Matrixanteil des Ziegels das eine oder die mehreren AlN-Polytyp-Sialone in einer Menge von 5 Massen-% oder mehr enthält.

2. Der Ziegel wie in Anspruch 1 genannt, wobei die Mineralzusammensetzung enthält: 40 bis 94 Massen-% Korund; 10 Massen-% oder weniger Graphit und/oder Koks; 5 bis 59 Massen-% eines oder mehrerer, ausgewählt aus der Gruppe bestehend aus AlN-Polytyp-Sialonen vom 2H δ-Typ, 27R-Typ und 21R-Typ; 5 Massen-% oder weniger (einschließlich 0 Massen-%) AlN; und 3 Massen-% oder weniger (einschließlich 0 Massen-%) Si₃N₄, wobei ein Matrixanteil des Ziegels das eine oder die mehreren AlN-Polytyp-Sialone in einer Menge von 5 Massen-% oder mehr enthält.

3. Der Ziegel wie in Anspruch 1 oder 2 genannt, wobei der Matrixanteil das eine oder die mehreren AlN-Polytyp-Sialone in einer Menge von 10 bis 25 Massen-%, und Korund in einer Menge von 5 bis 30 Massen-% enthält.

4. Der Ziegel wie in einem der Ansprüche 1 bis 3 genannt, wobei ein Aggregatanteil des Ziegels frei von dem einen oder den mehreren AlN-Polytyp-Sialonen ist.

5. Der Ziegel wie in einem der Ansprüche 1 bis 4 genannt, wobei das eine oder die mehreren AlN-Polytyp-Sialone eine Kristallgröße von 0,5 mm oder weniger aufweisen.

## Revendications

1. Brique pour un lit d'un four de production de fer fondu, comprenant une composition minérale qui a : 40 à 95 % en masse de corindon ; 5 à 60 % en masse d'un ou plusieurs choisis dans le groupe constitué par les sialons polymorphes d'AlN de type δ 2H, de type 27R et de type 21R, 5 % en masse ou moins (y compris 0 % en masse) d'AlN ; et 3 % en masse ou moins (y compris 0 % en masse) de Si₃N₄, dans laquelle une partie de matrice de la brique contient le ou les sialons polymorphes d'AlN en une quantité de 5 % en masse ou plus.

2. Brique selon la revendication 1, dans laquelle la composition minérale a : 40 à 94 % en masse de corindon ; 10 % en masse ou moins de graphite et/ou de coke ; 5 à 59 % en masse d'un ou plusieurs choisis dans le groupe constitué par les sialons polymorphes d'AlN de type δ 2H, de type 27R et de type 21R, 5 % en masse ou moins (y compris 0 % en masse) d'AlN ; et 3 % en masse ou moins (y compris 0 % en masse) de Si₃N₄, dans laquelle une partie de matrice de la brique contient le ou les sialons polymorphes d'AlN en une quantité de 5 % en masse ou plus.

3. Brique selon la revendication 1 ou 2, dans laquelle la partie de matrice contient le ou les sialons polymorphes d'AlN en une quantité de 10 à 25 % en masse, et le corindon en une quantité de 5 à 30 % en masse.

4. Brique selon l'une quelconque des revendications 1 à 3, dans laquelle une partie d'agrégat de la brique est exempte du un ou plus sialons polymorphes d'AIN.

5. Brique selon l'une quelconque des revendications 1 à 4, dans laquelle le ou les sialons polymorphes d'AlN ont une taille de cristal de 0,5 mm ou moins.
